# EUROPEAN PATENT APPLICATION

(11) **EP 2 800 018 A1**
(43) Date of publication of application: **05.11.2014**
(21) Application number: 14166122.3
(22) Date of filing: 25.04.2014
(51) Int. Cl.: G06F 17/30

(54) **Method of providing information about electronic media content and electronic device supporting the same**

(30) Priority: 30.04.2013 KR 20130047881
(71) Applicant: Samsung Electronics Co., Ltd, Gyeonggi-do 443-742 (KR)
(72) Inventor: Kim, Geonsoo, 443-742 Gyeonggi-do (KR); Kim, Hanjib, 443-742 Gyeonggi-do (KR)
(74) Representative: Jenkins, Richard Gavin

(57) **Abstract**

A method of providing information about electronic media content and an electronic device supporting the same are provided. The method includes setting a cycle in at least a piece of content forming the electronic media content, identifying current content of the electronic media content based on information about an address of the at least a piece of content when the set cycle is reached, comparing the current content with previous content in order to determine whether the current content is identical with the previous content, and determining an execution of a content update based on a result of the comparing of the current content with the previous content.

## Description

### CROSS-REFERENCE TO RELATED APPLICATION(S)

This application claims the benefit under 35 U.S.C. § 119(a) of a Korean patent application filed on April 30, 2013 in the Korean Intellectual Property Office and assigned Serial number 10-2013-0047881, the entire disclosure of which is hereby incorporated by reference.

### TECHNICAL FIELD

The present disclosure relates to providing content. More particularly, the present disclosure relates to providing at least a piece of content included in electronic media content.

### BACKGROUND

Some electronic devices are fabricated and sold with a communication function and a size small enough to be portable. Recently, such electronic devices have dramatically grown with the support of hardware and software. Such a conventional electronic device supports access to a network based on a communication function and the reception and output of a page provided by a specific server. In such an environment, there is a need for the development of various types of service so that various user needs may be satisfied when displaying electronic media content in an electronic device.

Accordingly, a method of providing information about electronic media content and an electronic device supporting the same, which are capable of satisfying various users, needs.

The above information is presented as background information only to assist with an understanding of the present disclosure. No determination has been made, and no assertion is made, as to whether any of the above might be applicable as prior art with regard to the present disclosure.

### SUMMARY

Aspects of the present disclosure are to address at least the above-mentioned problems and/or disadvantages and to provide at least the advantages described below. Accordingly, an aspect of the present disclosure is to provide a method of providing information about electronic media content and an electronic device supporting the same, which are capable of satisfying various user needs.

In accordance with an aspect of the present disclosure, an electronic device for supporting the providing of information about electronic media content is provided.The electronic device includes a control unit configured to set a cycle in at least a piece of content forming the electronic media content, to compare current content with previous content in order to determine whether the current content is identical with the previous content in the set cycle, and to control at least one of notifying a content update and of determining the execution of the content update based on a result of the comparison of the current content with the previous content, and a communication unit configured to form a communication channel for accessing the electronic media content.

In accordance with another aspect of the present disclosure, a method of providing information about electronic media content using an electronic device is provided. The method includes setting a cycle in at least a piece of content forming the electronic media content, identifying current content of the electronic media content based on information about the address of the at least a piece of content when the set cycle is reached, comparing the current content with previous content in order to determine whether the current content is identical with the previous content, and determining the execution of a content update based on a result of the comparing of the current content with the previous content.

Other aspects, advantages, and salient features of the disclosure will become apparent to those skilled in the art from the following detailed description, which, taken in conjunction with the annexed drawings, discloses various embodiments of the present disclosure.

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1 is a schematic diagram showing the construction of an electronic device for providing content according to an embodiment of the present disclosure;
FIG. 2 is a detailed diagram showing the construction of a control unit of the elements of the electronic device shown in FIG. 1 according to an embodiment of the present disclosure;
FIG. 3 is a diagram illustrating a method of controlling the electronic device for content update designation that belongs to a content providing according to an embodiment of the present disclosure;
FIG. 4 is a diagram illustrating a method of controlling the electronic device for an update content notification that belongs to the content providing function according to an embodiment of the present disclosure;
FIG. 5 is a diagram of a screen illustrating an example of a screen interface for providing content according to an embodiment of the present disclosure;
FIG. 6 is a diagram of a screen illustrating another example of a screen interface for providing content according to an embodiment of the present disclosure;
FIG. 7 is a diagram of a screen illustrating yet another example of a screen interface for providing content according to an embodiment of the present disclosure; and
FIG. 8 is a diagram of a screen illustrating an example of a screen interface for an update content notification in the providing of content according to an embodiment of the present disclosure.

Other aspects, advantages, and salient features of the disclosure will become apparent to those skilled in the art from the following detailed description, which, taken in conjunction with the annexed drawings, discloses various embodiments of the present disclosure.

### DETAILED DESCRIPTION

The following description with reference to the accompanying drawings is provided to assist in a comprehensive understanding of various embodiments of the present disclosure as defined by the claims and their equivalents. It includes various specific details to assist in that understanding but these are to be regarded as merely exemplary. Accordingly, those of ordinary skill in the art will recognize that various changes and modifications of the various embodiments described herein may be made without departing from the scope and spirit of the present disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

In describing the various embodiments, a description of contents that are well known in the art to which this specification pertains and are not directly related to this specification is omitted in order to make the gist of this specification clearer by omitting an unnecessary description.

For the same reason, in the accompanying drawings, some elements have been illustrated as being enlarged, omitted, or schematically depicted. Furthermore, the size of each element does not accurately reflect its real size. Accordingly, the present disclosure is not restricted by a relative size or interval drawn in the accompanying drawings.

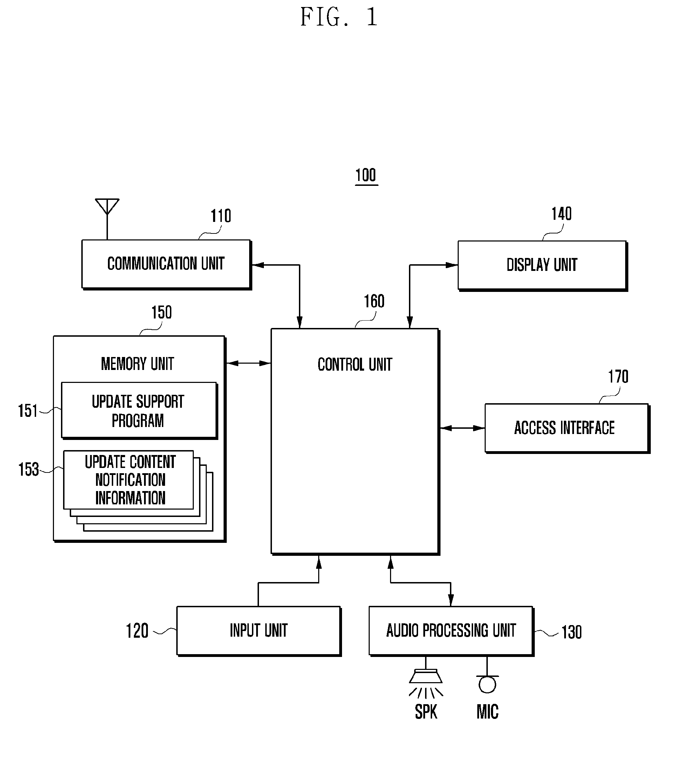

FIG. 1 is a schematic diagram showing the construction of an electronic device which provides a content operation function according to an embodiment of the present disclosure.

Referring to FIG. 1, an electronic device 100 of the present disclosure may include a communication unit 110, an input unit 120, an audio processing unit 130, a display unit 140, a memory unit 150, a control unit 160, and an access interface 170.

The electronic device 100 may receive electronic media content using the communication unit 110. Furthermore, the electronic device 100 may output electronic media content to the display unit 140. The electronic media content may be configured to include a plurality of pieces of content. For example, the electronic media content may include at least a piece of image content, audio content, and text content. At least one piece of image content may include a still image and/or a moving image. The text content may correspond to text disposed in a specific template in a structure that forms electronic media content, for example, in a template. Each of pieces of content that form electronic media content may include unique ID information. Multimedia, such as a photo and a moving image, together with a web code, such as electronic media content, may be provided to the electronic device 100. The electronic device 100 of the present disclosure may provide an update designation function for content that has been generated as at least some region of electronic media content. Furthermore, the electronic device 100 may perform processing for collecting pieces of update information about content whose update has been designated. In such an operation, the electronic device 100 may process whether content whose update has been designated has been updated through background processing. Furthermore, if update content is present, the electronic device 100 may provide the update content using at least one of various methods, such as pop-up, the output of an indicator, and the output of a guidance sound. The electronic device 100 may drive a protocol routine and a socket routine for supporting corresponding content in order to receive data when examining whether content whose update has been designated has been updated and when updating content whose update has been designated. The protocol routine and the socket routine may be driven in a predetermined cycle in order to check whether content whose update has been designated has been updated.

The communication unit 110 may support the formation of a communication channel with a server apparatus which provides electronic media content by forming a communication channel with a communication network. The communication network may be a network element for supporting the formation of the communication channel between the electronic device and the server apparatus. For example, the server apparatus may be an element for generating electronic media content including content and providing the electronic media content to the electronic device.

The communication unit 110 may be configured in the form of at least one of various communication modules capable of receiving electronic media content from a server apparatus. For example, the communication unit 110 may be configured in the form of a Wi-Fi module capable of accessing a server apparatus through a wireless access point or in the form of a mobile communication module capable of accessing a server apparatus through a mobile communication system. The communication unit 110 of the present disclosure may form a communication channel based on Hyper Text Transport Protocol (HTTP) along with a server apparatus and may receive various pieces of content that form Hyper Text Markup Language (HTML) data and electronic media content based on HTTP. The communication unit 110 may form an additional communication channel periodically or semi-permanently in order to operate on specific content whose update has been designated, of various pieces of content that form electronic media content. For example, the communication unit 110 may assign a plurality of sockets and support the reception of information in order to operate a plurality of pieces of content whose update has been designated.

The input unit 120 is an element for generating various input signals necessary to manipulate the electronic device 100. The input unit 120 may be implemented using a home key, a side key, and a keypad. If the display unit 140 of the electronic device 100 supports an input function, the input unit 120 may include the display unit 140 of a touch screen type and/or a type including a touch panel. Alternatively, the input unit 120 may be implemented using a stylus pen and/or an electromagnetic induction pen and a panel supporting the stylus pen and/or the electromagnetic induction pen. The input unit 120 may generate an input signal for requesting access to a server apparatus, an input signal for designating update for specific content of electronic media content provided by a server apparatus, an input signal for identifying an item of content whose update has been designated, and an input signal for cancelling content update designation in response to a request from a user. The generated input signal may be transferred to the control unit 160, thus serving as an instruction for executing a function according to a corresponding input intention.

The audio processing unit 130 may include a Speaker (SPK) in order to support the output of various audio data according to an operation of the electronic device 100. If the electronic device 100 supports a call function or a recording function, the audio processing unit 130 may include a Microphone (MIC) for collecting audio data. The audio processing unit 130 may support the output of audio data for informing the reception of electronic media content and the output of guidance sound and/or a sound effect for guiding the designation of update for content that has been generated as at least some region of electronic media content. Furthermore, the audio processing unit 130 may support the output of audio data for guiding the update of content whose update has been designated when the content is updated. The audio processing unit 130 may support the output of audio data when content whose update designation has been cancelled is generated. The support of the guidance sound and/or sound effect output may be omitted depending on a user's configuration.

The display unit 140 may display various screens necessary to operate the electronic device 100. For example, the display unit 140 may output electronic media content, for example, a web page provided by a server apparatus that has been accessed through the communication unit 110. Furthermore, if a page is requested to be switched and/or a detailed content view for specific content is requested in response to user manipulation, the display unit 140 may support the output of a page according to a corresponding request. Such a display unit 140 may be configured in a form that includes a touch panel and a display panel in order to support an input function in addition to a display function.

If the update of specific content generated as at least a region of electronic media content is designated, the display unit 140 may display a list of a plurality of pieces of content whose update has been designated. A plurality of the update designation lists may include an icon and/or resizing information corresponding to pieces of information related to content selected when the update of the content is designated. The construction and display of an update designation list and the output of a screen according to an operation of the update designation list are described in more detail later with reference to the accompanying drawings.

The memory unit 150 may store various programs necessary to drive the electronic device 100 of the present disclosure and programs related to various functions supported by the electronic device 100 and store data according to a corresponding program support and/or program operation. For example, the memory unit 150 may include a web browser for accessing a server apparatus and may support the output of electronic media content received from a server apparatus through a web browser. For content update support of the present disclosure, the memory unit 150 may include an update support program 151 and update content notification information 153.

The update support program 151 may include a designation routine for supporting the designation of content to be updated in electronic media content and a routine for storing a plurality of pieces of content whose update has been designated as the update content notification information 153. The designation routine may include a routine for providing support so that the update of specific content generated as at least some region of electronic media content may be designated and a routine for supporting the setting of an update cycle for content whose update has been designated. The update support program 151 may include a routine for determining cycle information written in the update content notification information 153 stored in the memory unit 150, a routine for identifying whether at least a piece of content has been updated when the written cycle of specific content is reached, and a routine for collecting updated content when content update is generated. The update support program 151 may include a routine for replacing collected update content with previously stored content and a routine for outputting a content replacement notice.

The update content notification information 153 may include information related to content whose update has been designated. For example, the update content notification information 153 may include information about an image, text, or audio of designated content. The update content notification information 153 may include information about an image, text, or audio of updated content. Furthermore, the update content notification information 153 may accumulate information about content pieces of content updated in a specific cycle and store the accumulated information. For example, the update content notification information 153 may include content designated when first update was requested and at least a piece of update content collected in a specific cycle. Accordingly, a user may check an update history of content whose update has been designated and update content collected whenever update is performed.

The update content notification information 153 may include update check cycle information. If a user's configuration is not present, the update check cycle information may be defined as a specific cycle based on information set by default. Alternatively, the update check cycle information may be differently defined by default depending on the type of updated content. For example, if content is weather information, the update check cycle information may be a unit of 6 hours. Furthermore, if content is economy news information, the update check cycle information may be a unit of 10 minutes. Furthermore, if content is content disposed in a specific region of a specific blog, the update check cycle information may be a unit of 1 day.

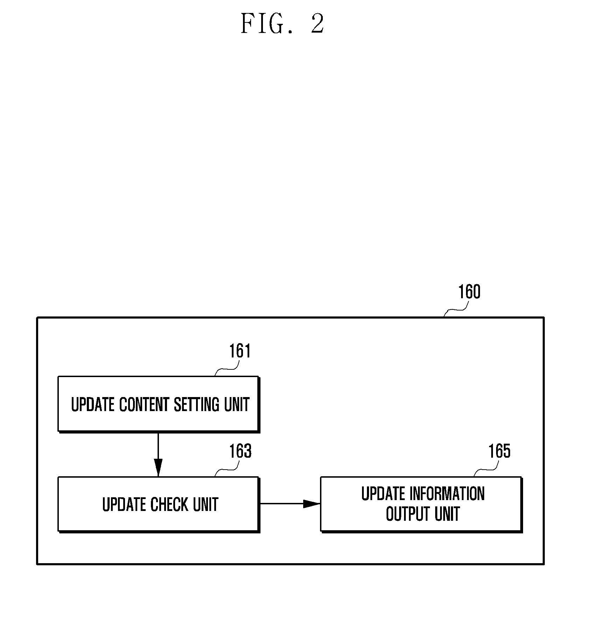

The control unit 160 may support the overall flow of signals related to control on the operations of the electronic device 100 and the processing, transfer, storage, and management of data. The control unit 160 may include elements, such as those shown in FIG. 2, in order to support the update of content generated as at least some region of electronic media content of the present disclosure.

FIG. 2 is a detailed diagram showing the construction of the control unit 160 of the elements of the electronic device shown in FIG. 1 according to an embodiment of the present disclosure.

Referring to FIG. 2, the control unit 160 of the present disclosure may include an update content setting unit 161, an update check unit 163, and an update information output unit 165.

The update content setting unit 161 may support the designation of update for at least one of pieces of content generated as at least some region of electronic media content. To this end, the update content setting unit 161 may provide a menu item and/or an icon for supporting a content update function of the present disclosure. Furthermore, when a menu item or an icon is selected, the update content setting unit 161 may control electronic media content set by default or specific electronic media content requested by a user so that the electronic media content is activated and outputted to the display unit 140. When the electronic media content is outputted, the update content setting unit 161 may support the output of information guiding that a current mode is a content update designation mode. The update content setting unit 161 may collect information about the address of at least a piece of content that has been designated in electronic media content. Furthermore, the update content setting unit 161 may control collected content address information so that the content address information is stored in the memory unit 150 as the update content notification information 153.

Furthermore, the update content setting unit 161 may provide a function for supporting the content update function of the present disclosure in an operation for searching for specific electronic media content. Accordingly, in a state in which specific electronic media content has been outputted to the display unit 140, a user may generate an input event for activating the content update function. The update content setting unit 161 may provide a specific menu item within electronic media content as an item for calling the content update function. Alternatively, when an event for calling a menu is generated in a state in which electronic media content has been outputted, the update content setting unit 161 may support the output of a list of menus which include an item for selecting the content update function. Alternatively, the update content setting unit 161 may support the activation of the content update function in response to information about a predetermined gesture. For example, when a predetermined gesture is generated on the display unit 140 to which specific content has been outputted, content indicated by the predetermined gesture may be collected as the update content notification information.

When specific content of electronic media content is designated as update content, the update content setting unit 161 may collect information about the address of the electronic media content including the update content and information about the position of the update content in the electronic media content. The update content setting unit 161 may convert all pieces of electronic media content into coordinates having two axes and define information about the position of update content as a position on the coordinates. Alternatively, the update content setting unit 161 may collect information about the tag of update content instead of information about the position of the update content. For example, if electronic media content is written in an HTML language, the electronic media content may be defined as HTML source code, and each of pieces of content included in the electronic media content may be defined as having each piece of unique tag information in the HTML source code. Accordingly, the update content setting unit 161 may extract specific content using tag information from the electronic media content. The tag information may be replaced with source information that defines update content in the corresponding electronic media content.

The update content setting unit 161 may support the collection of information about the cycle of update content. To this end, the update content setting unit 161 may support the output of an input window for inputting cycle information when specific content is designated for update purposes in electronic media content. Furthermore, the update content setting unit 161 may collect cycle information, inputted through a corresponding input window, as information about the cycle of corresponding update content. Here, the update content setting unit 161 may provide support so that a user may select various items by providing a cycle list of the various items. For example, when an input event for designating specific content of electronic media content as update content is generated, the update content setting unit 161 may control a cycle list including at least one cycle setting item so that the cycle list is automatically outputted. Furthermore, when a specific cycle setting item is selected or cycle information is inputted, the update content setting unit 161 may store the cycle information and corresponding content as the update content notification information 153. If a cycle is not set, the update content setting unit 161 may automatically set specific cycle information, defined by default, as the update cycle of corresponding content.

The update check unit 163 may manage pieces of the update content notification information 153 stored in the memory unit 150. The update check unit 163 may check cycle information defined in at least a piece of the update content notification information 153 and check whether each piece of cycle information has been reached. The time when cycle information is started may be the time when specific content is designated as update content. The time when cycle information is started may be the time designated by a user.

When cycle information is reached, the update check unit 163 may check information about the address of update content whose cycle information has been reached. Furthermore, the update check unit 163 may access electronic media content corresponding to address information through the communication unit 110. The update check unit 163 may check information about the position of update content in the electronic media content through the update content notification information 153. Furthermore, the update check unit 163 may check whether information about previously stored content is identical with information about content now disposed in the electronic media content. If information about previously stored content is not identical with information about content now disposed in the electronic media content, the update check unit 163 may collect content as update content and provide the update content to the update information output unit 165. Furthermore, the update check unit 163 may update the update content notification information 153 using collected update content. That is, the update check unit 163 may replace previously stored content, included in the update content notification information 153, with currently collected content. Furthermore, the update check unit 163 may store and manage a history of pieces of updated content. Furthermore, the update check unit 163 may provide a history of pieces of updated content in response to a request from a user. The history of pieces of updated content may include information about an image, text, and/or audio of the pieces of update content and information about the time when the pieces of update content were updated.

When the update check unit 163 provides update content, the update information output unit 165 may control the update content so that the update content is outputted to the display unit 140. In this operation, the update information output unit 165 may provide a list of a plurality of pieces of update content if the plurality of pieces of update content has been designated. Furthermore, the update information output unit 165 may output the notification of update content. For example, when update content is received from the update check unit 163, the update information output unit 165 may control a pop-up window for an update notice, guidance sound for an update notice, and vibration for an update notification so that the pop-up window, the guidance sound, and the vibration are outputted. The electronic device 100 may further include a vibration unit (not shown) for vibration output. An update content list provided by the update information output unit 165 may be provided through an additional page screen or may be included in an indicator extension region and provided.

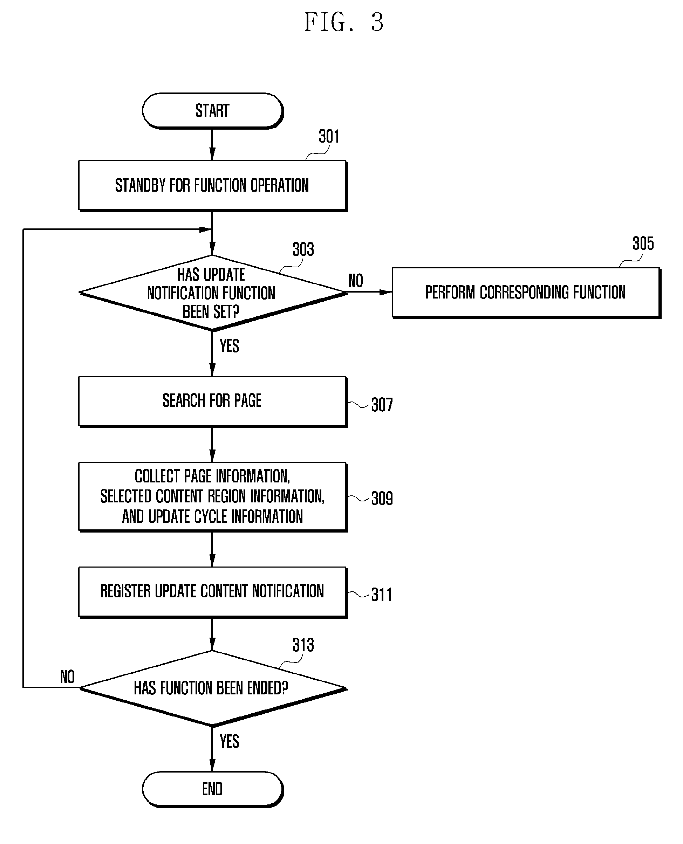

FIG. 3 is a diagram illustrating a method of operating an electronic device for designating content update in a content operation according to an embodiment of the present disclosure.

Referring to FIG. 3, the control unit 160 of the electronic device 100 may perform standby for a function operation at operation 301. For example, the control unit 160 may output a standby screen or support a state in which a menu screen has been outputted. The control unit 160 may perform access to a specific server apparatus in response to a request from a user or based on set schedule information and output electronic media content, provided by a corresponding server apparatus, to the display unit 140. For another example, the control unit 160 may output specific electronic media content stored in the memory unit 150, for example, in cookies to the display unit 140 without performing access to an additional server apparatus. The electronic media content stored in the memory unit 150 may include information about the source and address of a page. Furthermore, the control unit 160 may perform a specific function, for example, a file playback function or a broadcasting reception function in response to a user's control.

The control unit 160 may check whether an event for setting an update notification function has been generated at operation 303. The control unit 160 may provide a menu item or an icon for executing the content update function in a function operation standby operation. The control unit 160 may map a specific key of the input unit 120 as a hot key for activating the content update function and check whether a corresponding key input signal has been generated. If, as a result of the check at operation 303, an input signal for executing the content update function is found to have not been generated, the control unit 160 may branch to operation 305 at which the control unit 160 performs the support of a specific function of the electronic device 100. For example, at operation 305, the control unit 160 may perform standby for a function operation and/or support a previously executed function.

If, as a result of the check at operation 303, an input signal for executing the content update function is found to have been generated, the control unit 160 may branch to operation 307 at which the control unit 160 supports a page search. A provided page, as described above, may be at least one of a page provided by specific electronic media content in real time and specific electronic media content previously stored in the memory unit 150. Alternatively, order of operation 303 performed by the control unit 160 and operation 307 performed by the control unit 160 may be changed. For example, in the state in which a page search has been first performed, an event for setting the update notification function may be generated. In the state in which electronic media content has been outputted to the display unit 140, a user may generate an input signal for the content update function. When an input signal for the content update function is received, the control unit 160 may output predetermined electronic media content or electronic media content according to a request from a user to the display unit 140 in response to the input signal.

The control unit 160 may collect information about a selected content region in corresponding electronic media content in response to an event that is generated from at least one of the input unit 120 and the display unit 140 having an input function at operation 311. At a point of time at which the event is generated, the control unit 160 may collect information about the address of electronic media content that is being outputted to the display unit 140. Furthermore, the control unit 160 may collect content update cycle information. The control unit 160 may support the output of an input window for inputting cycle information. Alternatively, the control unit 160 may determine cycle information defined by default to be update cycle information about corresponding selected content.

When information about update content is collected, the control unit 160 may perform the registration of an update content notification at operation 311. That is, the control unit 160 may store information related to collected content in the memory unit 150 as the update content notification information 153.

The control unit 160 may check whether an event for a function end has been generated at operation 313. If, as a result of the check at operation 313, an event for a function end is found to have not been generated, the control unit 160 may return to operation 303 and support the re-execution of subsequent operations.

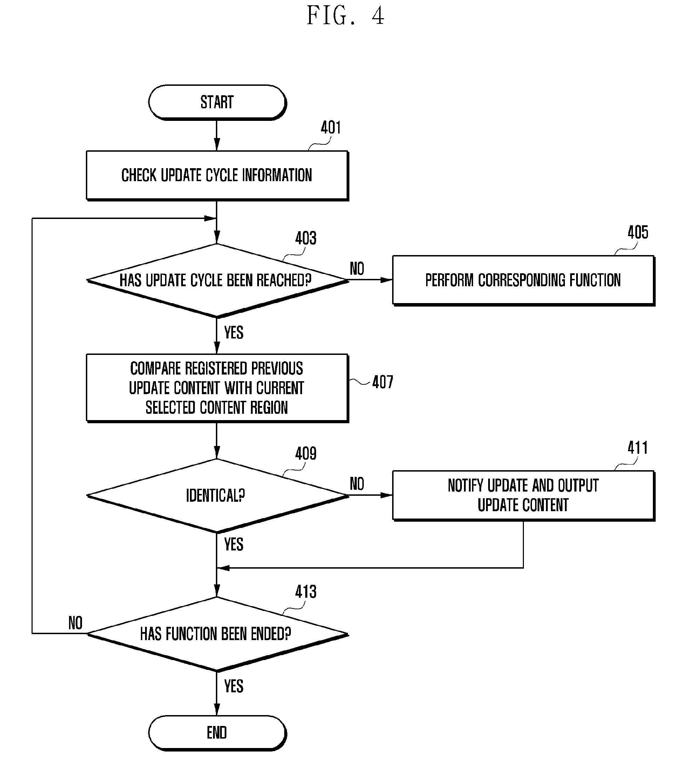

FIG. 4 is a diagram illustrating a method of operating an electronic device for an update content notification in a content operation according to an embodiment of the present disclosure.

Referring to FIG. 4, the control unit 160 may perform a check on update cycle information at operation 401. To this end, the control unit 160 may collect pieces of cycle information from pieces of the update content notification information 153 stored in the memory unit 150. Furthermore, the control unit 160 may check whether the update cycles of the pieces of collected update content notification information 153 have been reached at operation 403. The check on whether the update cycle of the collected cycle information 153 has been reached may be performed through background processing. The control unit 160 may perform another function of the electronic device 100, for example, a specific file playback function or electronic media content search function according to a request from a user while performing operation 401.

If, as a result of the check at operation 403, the update cycle of the collected cycle information 153 is found to have not been reached, the control unit 160 may branch to operation 405 at which the control unit 160 supports the execution of a corresponding function of the electronic device 100. For example, the control unit 160 may support the execution of a specific function according to a request from a user, such as a broadcasting reception function, a file playback function, a call function, or a memo writing function, or a function predetermined in a schedule.

If, as a result of the check at operation 403, the update cycle of the collected cycle information 153 is found to have been reached, the control unit 160 may branch to operation 407 at which the control unit 160 performs a comparison on a selected content region of registered update content. The control unit 160 may check information about the address of electronic media content in the update content notification information 153 whose update cycle has been reached and perform access to a corresponding server apparatus. The control unit 160 may receive the electronic media content, for example, a web page from the server apparatus. The control unit 160 may check information about the selected content region included in the update content notification information 153 and check the content region in the electronic media content. For example, the control unit 160 may extract current content disposed in the selected content region of the electronic media content. The control unit 160 may determine whether currently collected content is identical with previously stored content by comparing the currently collected content with the previously stored content at operation 409. The control unit 160 may collect tag information corresponding to selected content, check information about the source of electronic media content, and collect information about the selected content to be compared. The control unit 160 may determine whether currently collected content is identical with previously stored content by comparing the currently collected content with the previously stored content based on tag information.

If, as a result of the determination at operation 409, registered update content notification information is determined not to be identical with the update check content region, the control unit 160 may determine that content has been updated. In this case, the control unit 160 may branch to operation 411 at which the control unit 160 supports an update notification and the output of the update content. The update notification may be performed using at least one of various methods, such as the output of a pop-up window, the output of guidance sound, and the output of vibration. For the output of the update content, the control unit 160 may output only the update content or output electronic media content including the update content.

If, as a result of the determination at operation 409, the registered previous update content is determined to be identical with the currently collected content, the control unit 160 may determine that content update is not present. The control unit 160 may branch to operation 413 at which the control unit 160 checks whether an event for a function end has been generated. If, as a result of the check at operation 413, an event for a function end is found not to have been generated, the control unit 160 may return back to operation 403 and support the execution of subsequent operations.

In relation to the function end, if an update designation list in which the update of a plurality of pieces of content has been designated is present, the control unit 160 may support the execution of the aforementioned operations until all items included in the update designation list are removed.

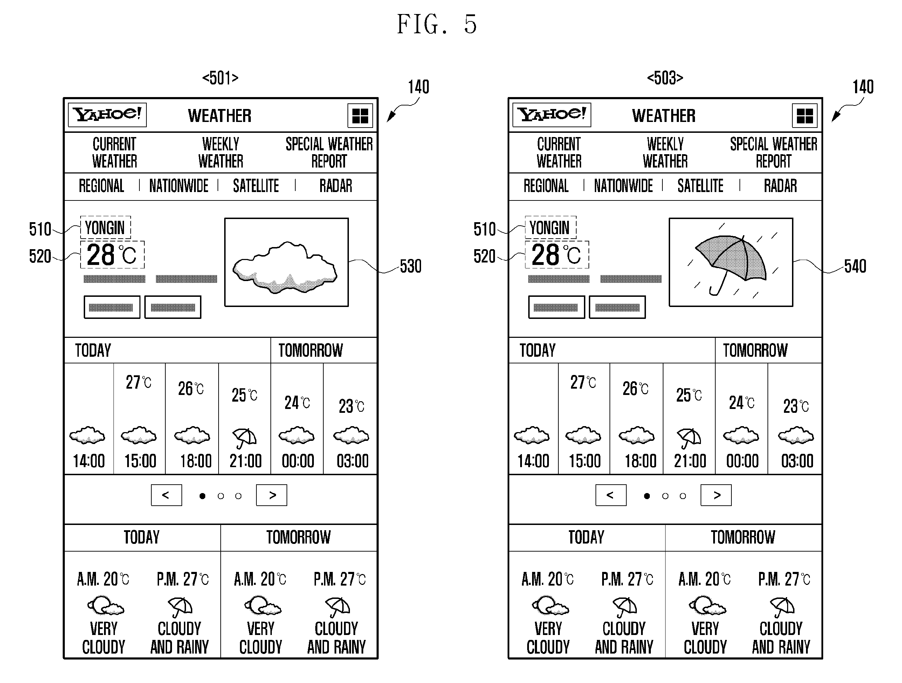

FIG. 5 is a diagram illustrating an example of a screen interface for illustrating the support of a content update function according to an embodiment of the present disclosure.

Referring to FIG. 5, the display unit 140 of the present disclosure may perform access to specific electronic media content in response to a request from a user. For example, the display unit 140 may perform access to electronic media content that provides weather information as in a screen 501. As shown in FIG. 5, the weather information page may include area information 510 "Yongin", temperature information 520 "28 degrees", and first image information 530 about weather. The weather information page may further include weather information according to hour, today's weather information, and tomorrow's weather information.

A user may select at least one specific region as update content in the screen 501. For example, the user may select the area information 510 and the first image information 530 as update content. For another example, the user may select the temperature information 520 and the first image information 530 as update content. For yet another example, the user may select only the first image information 530 as update content. When the user selects content, the control unit 160 may automatically set an update cycle based on a criterion defined by default. For example, the control unit 160 may set 20-minutes cycle information in the case of weather. For another example, the control unit 160 may define the total update time of weather content as 5 hours in relation to the weather content. Accordingly, whether the weather content has been updated may be checked every 20 minutes from a point of time at which the user has defined update content. Furthermore, if 5 hours elapses from a start time, the control unit 160 may remove the update content from the update content notification information 153.

In the operation of removing the update content, the control unit 160 may support the execution of a procedure for determining whether the update content will be additionally extended. When an expiration time for removing the update content is reached, the control unit 160 may control the output of a pop-up window that queries whether to extend the expiration time of the update content. Here, the control unit 160 may support the output of the pop-up window by adding an item for adjusting cycle information.

It is assumed that the user has selected the first image information 530 as update content in the screen 501 and information about electronic media content has been changed as in a screen 503 after a lapse of a specific time. When cycle information about the update content is reached, the control unit 160 may collect second image information 540 in a region in which the first image information 530 is placed in the screen 503. Furthermore, the control unit 160 may check whether the first image information 530 and the second image information 540 are identical with each other by comparing the first image information 530 and the second image information 540 with each other. If the first image information 530 has been changed into the second image information 540 as shown in FIG. 5, the control unit 160 may determine such a change to be content update and support a corresponding update notification the output of the update content.

If a plurality of pieces of content has been designated as update content, the control unit 160 may support a corresponding update notification and the output of update content when at least one of the plurality of pieces of content is changed. For example, if the temperature information 520 and image information are designated as update content, the control unit 160 may check whether at least one of the temperature information 520 and the image information has been updated whenever cycle information is reached. Meanwhile, in the operation of designating a plurality of pieces of content, information about the cycles of the plurality of pieces of content may be identically defined or information about the cycles of at least some of the plurality of pieces of content may be differently defined.

The control unit 160 may differently define information about the cycles of pieces of selected content depending on the characteristics of the content on the basis of predetermined information. Alternatively, the control unit 160 may define information about the cycle of selected content in response to a user's input as described above. The screen 501 and the screen 503 illustrate the entire electronic media content in order to describe the designation of update content related to weather information. If a user has selected the first image information 530 related to weather in the screen 501 related to weather information, the control unit 160 may control an operation of extracting only the second image information 540 in the screen 503 by determining a region of the electronic media content in which the first image information 530 is displayed and outputting the extracted second image information 540 to the display unit 140. Alternatively, when the first image information 530 changes into the second image information 540, the control unit 160 may control an operation of outputting the entire electronic media content to the display unit 140 as in the screen 503.

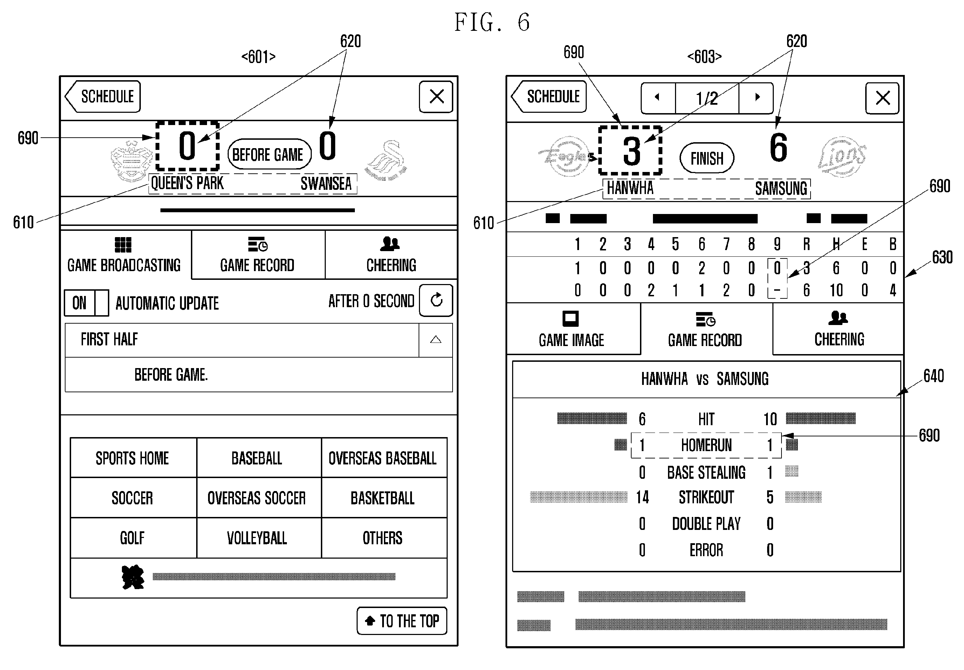

FIG. 6 is a diagram showing another example of a screen interface for illustrating update content designation in supporting the content update function according to an embodiment of the present disclosure.

Referring to FIG. 6, the display unit 140 of the present disclosure may perform access to specific electronic media content in response to a request from a user. For example, the display unit 140 may perform access to electronic media content that provides sports information as in a screen 601. As shown in FIG. 6, the sports information page may include team information 610 "Queens Park, Swansea" and score information 620 "0 : 0". The sports information page may further include various pieces of information, such as game broadcasting information and game record information.

A user may select information in which the user is interested or that needs to be checked by the user in the sports information page as update content. For example, the user may select at least one of the team information 610 and the score information 620 as update content. To this end, the user may generate a specific input signal for selecting a region in which the team information 610 is displayed. For example, the user may generate an input signal that taps a region of the display unit 140 in which the team information 610 is displayed or an input signal that draws a looped curve including the team information 610 using a finger or an electronic pen. The control unit 160 of the electronic device 100 may provide a predetermined guide box 690 for selecting a specific region of the electronic media content. The user may move the guide box 690 on the electronic media content and select the specific region. Here, the size or shape of the guide box 690 may be varied in response to the user's control. Alternatively, if the guide box 690 of a specific size is disposed in a specific region of the electronic media content, the control unit 160 may control an operation of automatically extracting the edge of content in a region in which the guide box 690 is disposed and automatically matching the guide box 690 with the edge of the content. To this end, the control unit 160 may collect information about the size of the region in which the content has been disposed from information about the source of the electronic media content and automatically control the guide box 690 so that the guide box 690 is matched with the size collected from the source information. Thereafter, the user may further select an additional region by controlling the guide box 690. The user may select a plurality of pieces of content included in the electronic media content as update content depending on an operation of the guide box 690. Meanwhile, the electronic device 100 may store and manage a plurality of pieces of content, designated by a plurality of taps, as a piece of update content although the guide box 690 is not provided. At least one guide box 690 may be disposed in a piece of electronic media content in response to a user's control. The control unit 160 may provide the guide box 690 by default or through an additional menu item in the operation of supporting the content update function.

Furthermore, electronic media content that provides sports information may include team information 610 "Hanwha, Samsung" and score information 620 "3:6" as in a screen 603. The electronic media content may further include game progress information 630 and game record information 640. The control unit 160 may provide a guide box 690 as described above with reference to the screen 601 or may collect specific content, designated by a user, as update content. Furthermore, the control unit 160 of the electronic device 100 may provide some pieces of information, included in a piece of content, as update content. For example, a user may select only a content region, corresponding to the 9^{th} inning in the game progress information 630, as update content. To this end, the user may generate an input signal for selecting a specific content region by operating the guide box 690 or using an electronic pen. Furthermore, the user may select only a home run region in the game record information 640 as an update content region.

The score information 620, the game progress information 630, and the game record information 640 illustrated in the screen 603 are pieces of information provided by a piece of electronic media content, and the characters of the pieces of information may be differently defined. For example, the score information 620 may correspond to information about a current point of time, the game progress information 630 may correspond to real-time information, and the game record information 640 may correspond to information about a current point of time based on pieces of the past accumulated information. The classification of the pieces of information may be defined in various ways depending on the characteristics of information according to a user's intention. Accordingly, the control unit 160 may provide the same cycle information about the score information 620, the game progress information 630, and the game record information 640 when providing cycle information about the score information 620, the game progress information 630, and the game record information 640 by default, but may provide a different piece of cycle information depending on each piece of information. For example, the control unit 160 may set 5-minutes unit cycle information about the score information 620 by default. Furthermore, the control unit 160 may set 1-hour unit cycle information about the game progress information 630 by default. Meanwhile, the control unit 160 may support the setting of cycle information according to a user's input in relation to each of the pieces of information.

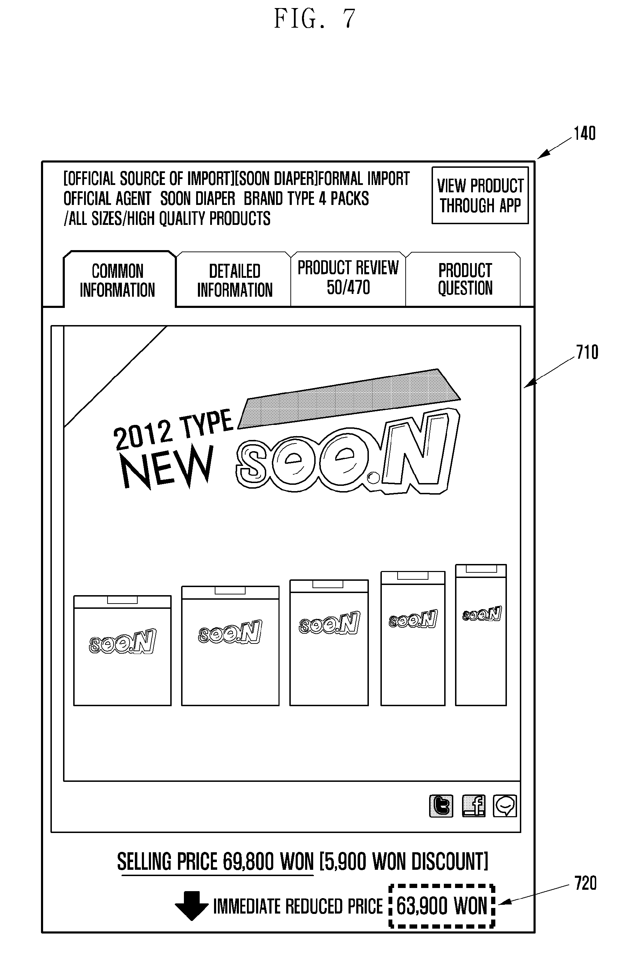

FIG. 7 is a diagram showing yet another example of a screen interface for illustrating a support of the content update function according to an embodiment of the present disclosure.

Referring to FIG. 7, the electronic device 100 may perform access to specific electronic media content, for example, a shopping mall web page in response to a request from a user or based on set schedule information. In response to the access, the display unit 140 may output the shopping mall web page as shown in FIG. 7. The shopping mall web page may be configured in various forms, but has been illustrated as including specific product information 710 and price information 720. A user may select the price information 720 as update content.

When a user selects a specific region of electronic media content as update content, the control unit 160 may perform analyses of the specific region. For example, when the price information 720 is designated as update content, the control unit 160 may perform Optical Character Recognition (or Reader) (OCR) on the price information 720. Furthermore, the control unit 160 may store numerical or alphabetic information, recognized as content, in the update content notification information 153. Thereafter, when a set cycle is reached, the control unit 160 may check the price information 720 in the same electronic media content and perform numerical or alphabetic recognition on the price information 720. Furthermore, the control unit 160 may compare current price information including recognized numerical or alphabetic information with previous price information including recognized numerical or alphabetic information. Accordingly, the control unit 160 may reduce a computational load attributable to a comparison between images because it uses a result of recognized numerical or alphabetic information.

The numerical and/or alphabetic recognition function may be likewise applied to the temperature information 520 of FIG. 5 and the team information 610, the score information 620, the game progress information 630, and the game record information 640 of FIG. 6. That is, the electronic device 100 of the present disclosure may check whether a content region designated in electronic media content has been written in text and apply the numerical and/or alphabetic recognition function based on a result of the check. Meanwhile, the electronic device 100 may check source information in the electronic media content and extract numerical or alphabetic information written in source information instead of using the numerical and/or alphabetic recognition function. For example, the control unit 160 may check source information related to the score information 620 in the electronic media content and collect numerical or alphabetic information about a score in the source information. Thereafter, the control unit 160 may determine whether content update is present by determining whether the numerical or alphabetic information has been changed in the same source information.

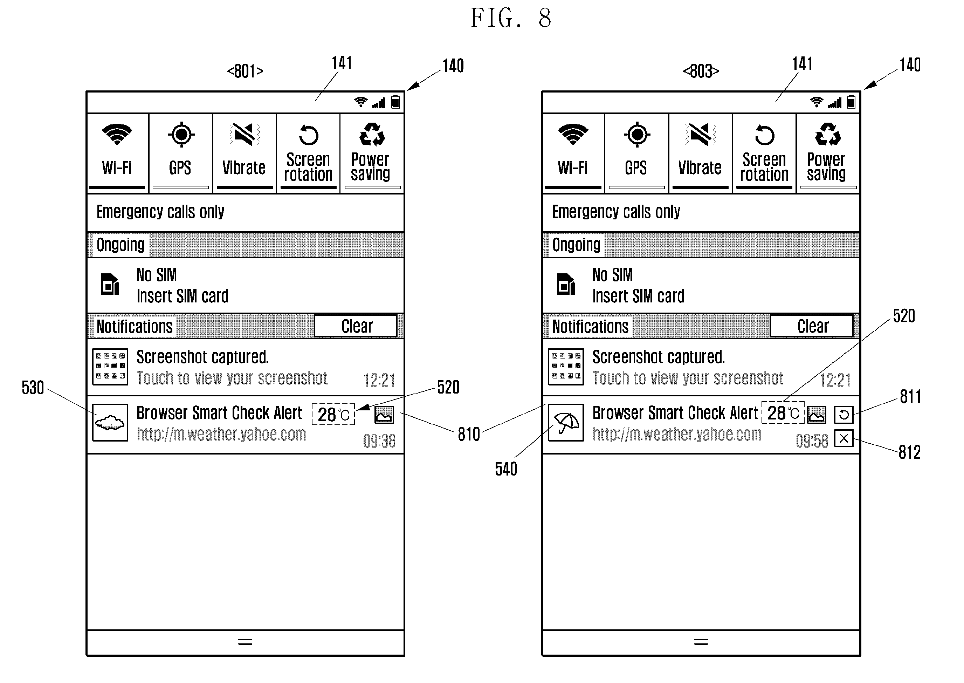

FIG. 8 is a diagram showing an example of a screen interface for an update designation list in supporting the content update function according to an embodiment of the present disclosure.

Referring to FIG. 8, the electronic device 100 of the present disclosure may provide an indicator extension screen as shown in FIG. 8, while performing a standby for a function or performing a specific function. The indicator extension screen may be outputted to the display unit 140 when an input signal that requests to extend an indicator region provided on one side of the electronic device 100 is generated. For example, a user may touch an indicator region 141 displayed on top of a screen 801 and perform a downward scroll operation. In response thereto, the control unit 160 may receive an input event that requests to output an indicator extension screen and support the output of a screen, such as that shown in FIG. 8.

The indicator extension screen may include an item capable of various configurations for the electronic device 100, for example, a Wi-Fi configuration, a GPS configuration, a vibration or ring tone configuration, a screen switching configuration, and a save mode configuration. In particular, as shown, the indicator extension screen may include an update content item 810. The update content item 810 may be included as one item of a notification list. The update content item 810 shown in the screen 801 may be an item generated when the first image information 530 of FIG. 5 is designated as update content. If the cycle of update content is set as a 20-minutes unit, the control unit 160 may perform the collection of weather information at 09:58 a.m. Furthermore, if the second image information 540 collected at 09:58 a.m. is different from the first image information 530 that was previously collected, the second image information 540 may be outputted as new image information as shown in FIG. 8.

At this time, the control unit 160 may perform the output of guidance sound, vibration, or a pop-up window for informing the collection of the second image information 540. Meanwhile, if the image information collected at 09:58 a.m. is the same as the first image information 530 that was previously collected, the control unit 160 may omit additional notification output. Furthermore, the control unit 160 may change time information from 09:38 a.m. to 09:58 a.m. so that a point of time at which the collection of weather information has been updated may be checked.

When an input signal for selecting the update content item 810 is generated, the control unit 160 may control the electronic media content so that the electronic media content is outputted to the display unit 140. Alternatively, when the update content item 810 is selected, the control unit 160 may control a predetermined screen, for example, a list screen including a history of pieces of collected image information so that the predetermined screen is outputted.

The control unit 160 may control an operation of including a virtual update button 811 in the update content item 810 and outputting the update content item 810 so that the present weather information may be checked in the update content item 810 displayed on a screen 803. When the virtual update button 811 is selected, the control unit 160 may access electronic media content corresponding to the update content item 810, collect designated content, and provide the collected content. In the operation of providing the collected content, the control unit 160 may check whether the collected content is identical with previously collected information and provide a result of the check through a pop-up window or the like. Here, the virtual update button 811 may be designed as a button for changing information about the cycle of the update content item 810. Accordingly, when the virtual update button 811 is selected, the control unit 160 may support the output of a screen switch or pop-up window for changing cycle information. Furthermore, the control unit 160 may control an operation of including a virtual removal button 812 for removing the update content item 810 in the update content item 810 and outputting the update content item 810.

Meanwhile, the update content item 810 may include the temperature information 520. The temperature information 520 may be included in the update content item 810 in an image form like the first image information 530 and/or the second image information 540. Alternatively, as described above, the temperature information 520 may be recognized through numerical or alphabetic recognition or extracted from source information in text and displayed in a text form.

A comparison between pieces of content related to image information and numerical and/or alphabetic information has been chiefly described above, but the present disclosure may support the notification of content update according to a comparison between pieces of audio content. For example, in the case where specific audio content has been designated as update content, when a set cycle of the specific audio content is reached, the electronic device 100 of the present disclosure may collect audio content, disposed in the same position as that of the designated audio content, in corresponding electronic media content and check whether the collected audio content is identical with previously stored audio content. In this operation, the electronic device 100 may extract at least some of the audio content and compare the extracted audio content with the previously stored audio content. Furthermore, the electronic device 100 may perform a comparison between the waveforms of pieces of audio content in order to compare the pieces of audio content with each other. Alternatively, the electronic device 100 may convert pieces of audio content into pieces of text and check whether the pieces of text are the same by comparing the pieces of text with each other. The electronic device 100 may provide an algorithm and a database for supporting a text conversion function and an OCR function for a comparison between pieces of audio content in order to support the text conversion function and the OCR function. The electronic device 100 may perform an operation of accessing a server apparatus that provides the support of an audio to text conversion function or an OCR function, providing content, collecting corresponding results, and comparing the results with each other.

As described above, the method of providing information about electronic media content and the electronic device supporting the same in accordance with the various embodiments of the present disclosure support a user so that the user may partially check specific content that needs to be checked periodically or repeatedly without examining all pages including the specific content. Furthermore, the present disclosure may provide a check on all pages when information about the update of specific content is generated, if necessary. As described above, the present disclosure may provide updated information to a user in an alarm form, if necessary, so that the user does not need to perform an operation of manually identifying a change of information about specific content.

Meanwhile, the electronic device may further include various and additional modules depending on the type of electronic device. That is, if the electronic device is a communication terminal, the portable device may further include elements that have not been described above, such as a short-range communication module for short-range communication, an interface for the data transmission and reception of the portable device using a wired communication method or a wireless communication method, an Internet communication module for performing an Internet function over an Internet network, and a digital broadcasting module for performing a function of receiving and playing back digital broadcasting. The elements may not be all enumerated because they are modified in various ways according to the convergence trend of digital devices, but elements equivalent to the aforementioned elements may be further added to the electronic device. Furthermore, it is to be noted that some of the elements included in the configuration of the electronic device of the present disclosure may be omitted or may be replaced with other elements. This may be easily understood by those skilled in the art.

Furthermore, the electronic device in accordance with an embodiment of the present disclosure may include, for example, all information communication and multimedia devices, such as a Portable Multimedia Player (PMP), a digital broadcasting player, a Personal Digital Assistant (PDA), a music player (e.g., an MP3 player), a portable game terminal, a smart phone, a notebook computer, and a handheld PC, and application devices therefor, as well as all mobile communication terminals that operate based on communication protocols corresponding to various communication systems.

As described above, in accordance with the method of providing information about electronic media content and the electronic device supporting the same according to the present disclosure, various user needs in operating content may be satisfied, and user convenience may be improved.

Various aspects of the present disclosure can also be embodied as computer readable code on a non-transitory computer readable recording medium. A non-transitory computer readable recording medium is any data storage device that can store data which can be thereafter read by a computer system. Examples of the non-transitory computer readable recording medium include Read-Only Memory (ROM), Random-Access Memory (RAM), CD-ROMs, magnetic tapes, floppy disks, and optical data storage devices. The non-transitory computer readable recording medium can also be distributed over network coupled computer systems so that the computer readable code is stored and executed in a distributed fashion. Also, functional programs, code, and code segments for accomplishing the present disclosure can be easily construed by programmers skilled in the art to which the present disclosure pertains.

At this point it should be noted that various embodiments of the present disclosure as described above typically involve the processing of input data and the generation of output data to some extent. This input data processing and output data generation may be implemented in hardware or software in combination with hardware. For example, specific electronic components may be employed in a mobile device or similar or related circuitry for implementing the functions associated with the various embodiments of the present disclosure as described above. Alternatively, one or more processors operating in accordance with stored instructions may implement the functions associated with the various embodiments of the present disclosure as described above. If such is the case, it is within the scope of the present disclosure that such instructions may be stored on one or more non-transitory processor readable mediums. Examples of the processor readable mediums include Read-Only Memory (ROM), Random-Access Memory (RAM), CD-ROMs, magnetic tapes, floppy disks, and optical data storage devices. The processor readable mediums can also be distributed over network coupled computer systems so that the instructions are stored and executed in a distributed fashion. Also, functional computer programs, instructions, and instruction segments for accomplishing the present disclosure can be easily construed by programmers skilled in the art to which the present disclosure pertains.

While the present disclosure has been shown and described with reference to various embodiments thereof, it will be understood by those skilled in the art that various changes in form and details may be made therein without departing from the spirit and scope of the present disclosure as defined by the appended claims and their equivalents.

## Claims

1. A method of providing information about electronic media content using an electronic device, the method comprising:
setting a cycle in at least a piece of content forming the electronic media content;
identifying current content of the electronic media content based on information about an address of the at least a piece of content when the set cycle is reached;
comparing the current content with previous content in order to determine whether the current content is identical with the previous content; and
determining an execution of a content update based on a result of the comparing of the current content with the previous content.

2. The method of claim 1, further comprising:
performing an update notification of the content,
wherein the performing of the update notification of the content comprises at least one of outputting a pop-up window that informs a user of the content update, outputting a guidance sound that guides the content update, and outputting a vibration that guides the content update.

3. The method of claim 1, wherein:
the identifying of the current content of the electronic media content comprises collecting the content in an image form, and
the comparing of the current content with the previous content comprises comparing an image of the current content with an image of the previous content in order to determine whether the current content is identical with the previous content.

4. The method of claim 3, further comprising:
recognizing one of numerical information and alphabetic information about the content collected in the image form, where the comparing of the current content with the previous content comprises comparing pieces of the recognized one of numerical information and alphabetic information with each other in order to determine whether the pieces of the recognized one of numerical information and alphabetic information are identical with each other.

5. The method of claim 1, further comprising:
outputting a guide box for designating the content in the electronic media content;
controlling at least one of a size, a shape, and a position of the guide box in response to an input signal; and
selecting a plurality of pieces of content in the electronic media content as at least one piece of update content using the guide box.

6. The method of claim 1, wherein the identifying of the current content of the electronic media content comprises:
examining tag information of defined content in source information of the electronic media content; and
collecting the content in the electronic media content based on the tag information.

7. The method of claim 1, wherein at least one of the identifying of the current content of the electronic media content, the comparing of whether the current content is identical with the previous content, and the determining of the execution of the content update is performed through background processing.

8. An electronic device for supporting a providing of information about electronic media content, the electronic device comprising:
a control unit configured to set a cycle in at least a piece of content forming the electronic media content, to compare current content with previous content in order to determine whether the current content is identical with the previous content in the set cycle, and to control at least one of notifying content update and of determining an execution of the content update based on a result of the comparing of the current content with the previous content; and
a communication unit configured to form a communication channel for accessing the electronic media content.

9. The electronic device of claim 8, further comprising at least one of:
a display unit configured to output a pop-up window that informs a user of the content update;
an audio processing unit configured to output a guidance sound that guides the content update; and
a vibration unit configured to output a vibration that guides the content update.

10. The electronic device of claim 8, wherein the control unit collects the content in an image form and compares an image of the current content with an image of the previous content in comprising the current content with the previous content.

11. The electronic device of claim 10, wherein the control unit recognizes one of numerical information and alphabetic information about the content collected in the image form and compares pieces of the recognized one of numerical information and alphabetic information with each other in order to determine whether the pieces of the recognized one of numerical information and alphabetic information are identical with each other, in comprising the current content with the previous content.

12. The electronic device of claim 8, further comprising:
a display unit configured to output a guide box for designating the content in the electronic media content; and
an input unit configured to control at least one of a size, a shape, and a position of the guide box or the display unit having an input function for controlling at least one of the size, the shape, and the position of the guide box.

13. The electronic device of claim 8, wherein the control unit performs the arrival of the update cycle of the content and the comparison through background processing and assigns information about cycle information, set by default, to the content depending on a type of the electronic media content.

14. The electronic device of claim 8, further comprising:
a display unit configured to output an input window for inputting cycle information when an input signal for designating specific content, included in the electronic media content, is update content.

15. The electronic device of claim 8, further comprising:
a memory unit configured to store information about an address of the electronic media content, information about a position of content in the electronic media content, and information about an update cycle of the content.
